# EUROPEAN PATENT APPLICATION

(11) **EP 0 589 327 A1**
(43) Date of publication of application: **30.03.1994**
(21) Application number: 93114705.2
(22) Date of filing: 13.09.1993
(51) Int. Cl.: H04M 1/27

(54) **Set for automatic telephone calls**

(30) Priority: 23.09.1992 IT PD920166
(71) Applicant: SIGN S.r.l., I-30033 Noale (Province of Venezia) (IT)
(72) Inventor: Pirozzi, Luciano, I-30033 Noale (Venezia) (IT)
(74) Representative: Modiano, Guido, Dr.-Ing.

(57) **Abstract**

Set for telephone calls comprising, in a single machine body, interconnected functions of a telephone set and an electronic computer. The computer (5), with an alphabetic/alphanumeric keyboard (2) and a video display (1), comprises one or more CPUs (7), a read-only memory (9), a RAM memory (8), a nonvolatile battery-backed memory (10), ports (12,13) for communication toward the keyboard (2) and the display (1), and I/O ports for mass-storage devices or for devices of other kinds.

## Description

The present invention relates to a set for telephone calls.

As is known, numerous more or less complex sets for telephone calls are available on the communications market.

Some of them combine the set with answering machines, automatic reply units, faxes or the like and other accessories.

Others, even more sophisticated, allow connection to specialized equipment.

All these various telephone sets, which use the same transmission medium, i.e. the public phone network, constantly have the feature of allowing to search for, select and call the subscriber required by the user by entering the corresponding telephone number on the numeric keyboard.

Indeed, there are some sets which, by pre-storing a series of names together with the corresponding telephone number, allow to search for, select and call the required subscriber by means of automatic systems.

However, in this case this feature assumes that the user has stored this information, as in a directory, and thus this feature is in any case restricted and limited to the data entered by the user.

The aim of the present invention is instead to allow the user, differently from what has been specified above, to call the required subscriber, in a generalized manner, not by entering or dialing the telephone number, but by entering all the personal data and/or any other identifying information of the required subscriber, or to preliminarily search for, select and call the required subscriber by entering such data even only partially.

Another object of the present invention is to provide a set which is highly reliable, relatively easy to manufacture and with competitive costs.

This aim, the objects mentioned and others which will become apparent hereinafter are achieved by a set for telephone calls characterized in that it comprises, in a single machine body, interconnected telephone-set and electronic-computer functions, with an alphabetic/alphanumeric keyboard and a video display, said computer comprising one or more CPUs, a read-only memory, a RAM memory, a nonvolatile battery-backed memory, ports for communication toward said keyboard and said display, and I/O ports for mass-storage devices or for devices of other kinds.

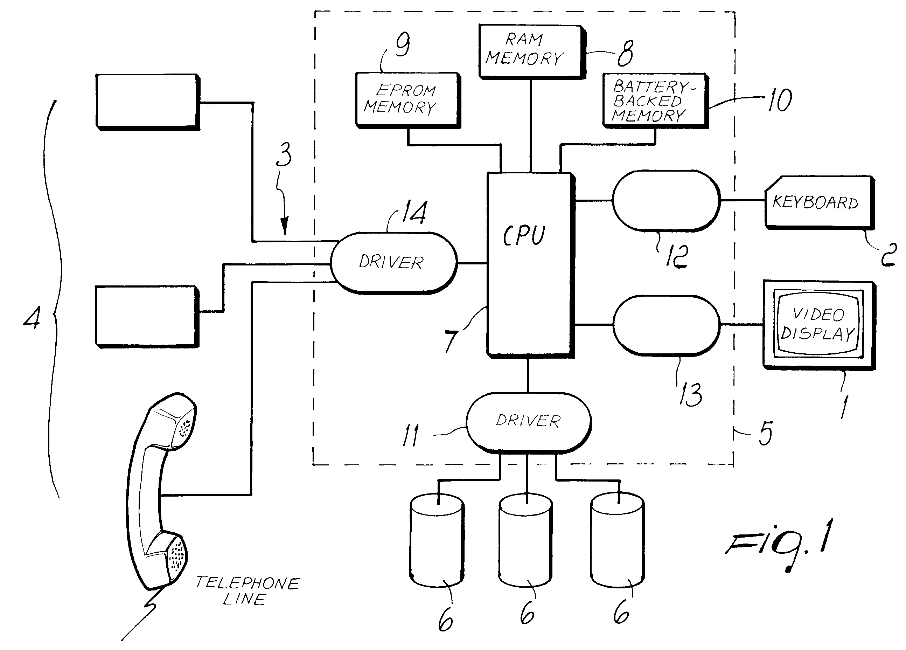

Further characteristics and advantages of the invention will become apparent from the following detailed description of a preferred but not exclusive embodiment thereof, illustrated only by way of non-limitative example in the accompanying drawing, wherein figure 1 is a block diagram of the set.

With reference to the accompanying figure, the set according to the invention is formed by assembling, in a single machine body, a video display 1, an alphanumeric keyboard 2, telephone circuitry 3 for one or more telephone devices 4, an electronic microcomputer 5 and one or more readers 6 for mass-storage media.

The microcomputer 5 comprises one or more processors 7, RAM memory 8, read-only memory 9, battery-backed memory 10, drivers 11 for mass- storage units, I/O ports, respectively 12 and 13, for the video display 1 and for the keyboard 2, and drivers 14 for driving the connections to the telephone devices 4.

The set is completed by a normal handset, which can naturally be separated therefrom and is connected thereto by means of a cable or of other conventional systems.

Operation of the set is supervised by an appropriate program which is contained in a read-only memory and the typical operation whereof can be summarized as follows:
-- when any operating command is entered at the keyboard by the user, the step for reading data from mass storage and for transferring them into RAM memory is activated;
-- by then acting on the keyboard and, with the aid of the video display through a guided menu, the scope of the search is narrowed in successive steps and, if necessary, with further exchanges between mass storage and RAM memory until the required subscriber is fully identified;
-- subsequently, by means of an appropriate function key, the process for automatically dialing the selected telephone number is started by transferring information between the computer component and the telephone component of the set.

The set according to the present invention in any case does not prevent normal numeric operation for calls.

In practice, the apparatus is provided, inside it, with a device which allows to read interchangeable mass-storage media (such as optical disks, magneto-optical disks, etc.) on which the personal data and/or any other search identification information of all telephone subscribers can be easily stored, all according to appropriate techniques for storing data on said media and to subsequent industrial processes for printing and duplicating said media (which can be performed easily, possibly by using the data banks owned by the companies which operate telephone services, which generally already store such data on magnetic media for their own use).

The above described set is not only capable of facilitating telephone operations, avoiding the need to maintain and constantly keep one's own directories or other more or less awkward systems for the preliminary storage of data on the part of the user, but also allows to avoid the problem of having to make resort to consulting telephone directories, which are not always immediately available.

Furthermore, if in widespread use, the set according to the present invention, by making the production and use of conventional telephone directories printed on paper substantially redundant, allows an evident considerable saving in terms of raw materials and space, considering that a normal 5 1/4" optical disk is capable of containing data equivalent to more than fifteen thousand pages of a telephone directory, i.e. approximately 12 to 15 normal directories.

In practice it has been observed that the intended aim and objects have been achieved.

The invention thus conceived is susceptible to numerous modifications and variations, all of which are within the scope of the inventive concept.

All the details may furthermore be replaced with other technically equivalent elements.

The components and materials employed, so long as they are compatible with the contingent use, as well as the dimensions and shapes, may in fact be any, even modular, according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Set for telephone calls, characterized in that it comprises, in a single machine body, interconnected functions of a telephone set and an electronic computer, with an alphabetic/alphanumeric keyboard (2) and a video display (1), said computer (5) comprising one or more CPUs (7), a read-only memory (9), a RAM memory (8), a nonvolatile battery-backed memory (10), ports (12,13) for communication toward said keyboard (2) and said display (1), and I/O ports for mass-storage devices or for devices of other kinds.

2. Apparatus according to claim 1, characterized in that it comprises at least one mass-storage media reader (6) with an access for the insertion and removal of media such as optical disks, magneto-optical disks or the like.

3. Apparatus according to one or more of the preceding claims, characterized in that said computer comprises at least one driver (14) to drive one or more telephone devices (4).

4. Apparatus according to one or more of the preceding claims, characterized in that it is suitable for connection to conventional existing telephone networks and in that it makes calls by entering, in a generalized manner, instead of the telephone number, personal data and/or other subscriber identification information.

5. Apparatus according to one or more of the preceding claims, characterized in that it is able to make a call after identifying the required subscriber by means of the preselection and search performed even by partial entry of the personal data and/or other identification information of said subscriber.
